# EUROPÄISCHE PATENTANMELDUNG

(11) **EP 2 821 548 A1**
(43) Veröffentlichungstag der Anmeldung: **07.01.2015**
(21) Anmeldenummer: 14171228.1
(22) Anmeldetag: 05.06.2014
(51) Int. Cl.: E01B 29/29, E01B 31/04, B23D 45/00

(54) **Verfahren und Vorrichtung zum Entfernen von am Schienensteg angebrachten Befestigungsmitteln**

(30) Priorität: 03.07.2013 DE 102013212944
(71) Anmelder: DB Netz AG, 60329 Frankfurt (DE)
(72) Erfinder: Neumann, Gerold, Hoyerswerda (DE)
(74) Vertreter: Zinken-Sommer, Rainer

(57) **Zusammenfassung**

Die Erfindung betrifft ein Verfahren zum Entfernen von Befestigungsmitteln, die am Schienensteg eines Schienenverkehrswegs angebracht sind und eine Vorrichtung zur Umsetzung des Verfahrens. Ein Trenngerät wird so mithilfe einer Fixier- und Führungsvorrichtung an den Schienen befestigt, dass es mit waagerechter Trennebene sicher und präzise von der Seite an den äußeren Schienensteg herangeführt werden kann, um dann die Befestigungsmittel am Schienensteg längs zu durchtrennen, sodass diese entfernt werden können.

## Beschreibung

Die Erfindung betrifft ein Verfahren zum Entfernen von Befestigungsmitteln, die am Schienensteg eines Schienenverkehrswegs angebracht sind und eine Vorrichtung zur Umsetzung des Verfahrens.

Insbesondere bei der Fixierung von Herzstücken an den das Herzstück umgebenden Flügelschienen, werden als Befestigungsmittel lange Bolzenschrauben verwendet, welche das Herzstück über Abstandshalter mit der Flügelschiene kraftschlüssig verbinden. Die Bolzenschrauben werden dabei durch entsprechende Bohrungen durch den Schienensteg geführt und mit Bolzenmuttern verspannt. Die Bolzenmuttern sind daher unterhalb des Schienenkopfes positioniert und können durch einen vertikalen Zugriff von oben nicht erreicht werden.

Bei Instandsetzungsarbeiten ist es manchmal erforderlich, die Herzstückbolzen zu lösen oder fester zu verspannen.

Besonders fest sitzende Bolzenmuttern, die mit üblichen Laschenschlüsseln oder Schlagschraubern nicht mehr gelöst oder verspannt werden können, müssen mithilfe von Schneid- oder Trennwerkzeugen entfernt werden.

Aufgrund ihrer schlecht zugänglichen Position ist ein Zugang zu den Bolzenschrauben nur von der Seite aus möglich. Dies ist mit freihändigen Verfahren nur unter erheblichen Sicherheitsmängeln möglich.

Im Stand der Technik sind für unterschiedliche Rahmenbedingungen bereits Vorrichtungen beschrieben, mit denen ein Schneid- oder Trenngerät mechanisch so fixiert und geführt werden kann, dass ein sicheres Arbeiten möglich ist.

Die DE 1 301 264 beschreibt ein Zusatzgerät für Winkelhandschleifmaschinen in Form eines mit Rollen versehenen, mit dem Gehäuse der Winkelschleifmaschine verbindbaren Laufwagens, der zum Führen des Winkelschleifers beim Trennen und Längsschneiden an einer Führungsschiene anliegt.

Die DE 2011 051 593 U1 beschreibt eine Führungsvorrichtung für einen Winkelschleifer, der horizontal entlang von Führungsschienen an das zu trennende Objekt herangefahren werden kann.

Die im Stand der Technik genannten Konstruktionen sind naturgemäß nur unter den spezifischen Rahmenbedingungen einsetzbar, für die sie entwickelt wurden. Sie sind daher für das der Erfindung zugrunde liegende Problem nicht verwendbar.

Aufgabe der vorliegenden Erfindung ist es, ein Verfahren bereitzustellen, mit dem ein seitlicher Zugang zu den zu entfernenden Befestigungsmitteln, insbesondere den Bolzenschrauben eines Herzstücks mithilfe eines Schneid- oder Trennwerkzeugs auf sichere Weise gewährleistet ist. Das Auftrennen der Bolzen soll dabei ohne großen Aufwand und für eine Vielzahl von Schienenprofilen bei unterschiedlichen Angriffspunkten am Herzstück möglich sein. Weiterhin ist es Aufgabe der Erfindung, eine Vorrichtung bereitzustellen, mit der ein sicheres Auftrennen der Bolzenschrauben ohne großen Aufwand und für eine Vielzahl von Schienenprofilen bei unterschiedlichen Angriffspunkten möglich ist. Hierzu muss die Vorrichtung gewährleisten, dass kein Verkanten oder Verklemmen des Trennmittels möglich ist.

Diese Aufgaben werden erfindungsgemäß durch die Vorrichtung gemäß Anspruch 1 und das Verfahren gemäß Anspruch 7 gelöst.

Vorteilhafte Weiterbildungen der Erfindung sind Gegenstände der abhängigen Ansprüche.

Aufgrund der Lage der Befestigungsmittel, die in der Regel aus einer Bolzenschraube mit Befestigungsmutter bestehen, in der Mitte des Schienenstegs, werden die Befestigungsmittel von oben durch den Schienenkopf verdeckt. Daher kann senkrecht von oben kein Zugriff auf die Befestigungsmittel zum Durchtrennen erfolgen. Das zum Auftrennen der Befestigungsmittel vorgesehene Schneid- bzw. Trenngerät, das im Folgenden abgekürzt nur noch als Trenngerät bezeichnet wird, muss daher seitlich an die Schiene herangeführt werden. Am sichersten kann der Trennvorgang erfolgen, wenn das Trenngerät mittig entlang der Bolzen geführt wird und somit waagerecht, d.h. parallel zur Schienenfußebene bewegt wird.

Hierfür wird erfindungsgemäß eine Fixier- und Führungsvorrichtung verwendet, welches das Trenngerät aufnimmt und das so an den Schienen fixierbar ist, dass die Trennebene während des Trennvorgangs waagrecht und mittig entlang der Bolzen stabil bleibt. Die Seite, an der das Trenngerät zum Trennen ansetzt, wird als Trennseite der Schiene definiert.

Das Grundgestell der Fixier- und Führungsvorrichtung verfügt erfindungsgemäß über mehrere Anschläge für die Schienenformen UIC 60, R 65, S 54, S 49. Um eine stabile Positionierung zu erreichen, stützt sich das Grundgestell an mehreren Stellen ab. Mithilfe von seitlichen Anschlägen stützt sich das Grundgestell an der Trennseite der zu bearbeitenden Schiene ab. Dies kann am Schienenkopf oder am Schienensteg selbst erfolgen. Auch wenn prinzipiell ein einziger Anschlag ausreichend wäre, verfügt das Grundgestell hier über vorzugsweise zwei Anschläge, die entlang der Längsrichtung der Schiene voneinander entfernt platziert sind. Da an dieser Schienenstegseite auch das Trenngerät ansetzen wird, um die Befestigungsmittel zu durchtrennen, müssen die Anschläge seitlich versetzt zum Schneidbereich angeordnet sein. Um die Anschläge weiterhin gegen die beim Schneiden auftretenden Gegenkräfte zu kontern, muss mindestens ein weiterer Anschlag auf der gegenüberliegenden Seite der Schiene vorhanden sein. Im Bereich der Herzstücke kommen sich die unterschiedlichen Schienen sehr nahe bzw. treffen sich, so dass das Grundgestell variabel ausgelegt sein muss hinsichtlich des Konteranschlags, der auf der gegenüberliegenden Seite entweder an derselben Schiene oder einer nahegelegenen weiteren Schiene ansetzt. Daher verfügt das Grundgestell in Richtung zur gegenüberliegenden Seite hin über einen verschieb- und fixierbaren Anschlag. Der Teil des Grundgestells, an dem der verschiebbare Anschlag hin und her verschoben werden kann, dient gleichzeitig als Auflage auf die unter dem Grundgestell durchlaufenden Schienenköpfe und als Verbindung zu den seitlichen Anschlägen auf der Trennseite. Die Fixierung des verschiebbaren Anschlags kann beispielsweise mit einer manuell bedienbaren Schraube erfolgen. Das Grundgestell kann mithilfe der Anschläge und der Fixierung des verschiebbaren Anschlags an jedem Punkt im Bereich des Herzstücks einer Weiche sicher fixiert werden. Aufgrund der Verschiebbarkeit kann es auch bei Gleisen mit unterschiedlichen Spurweiten verwendet werden, nicht nur im Weichenbereich.

Die Fixier- und Führungsvorrichtung verfügt weiterhin über eine Aufnahme für ein Trenngerät, mit der das Trenngerät relativ zum fixierten Grundgestell in einer waagerechten Trennebene auf der Trennseite der Schiene zum Schienensteg führbar ist.

Die Aufnahme des Trenngeräts erfolgt vorteilhaft an einem Ausleger, der beweglich mit dem Grundgestell verbunden ist.

Vorteilhaft ist eine vertikale Höhenverstellung der Aufnahme für das Trenngerät relativ zum Rest des fixierbaren Grundgestells, da somit die Vorrichtung für verschiedene Schienenhöhen verwendbar ist.

Die Höhenverstellung wird vorteilhaft mithilfe eines Spindelstocks realisiert. Das Gehäuse des Spindelstocks ist dabei fest an dem Grundgestell fixiert, während der Ausleger als bewegliches Teil am höhenveränderlichen Teil der Spindel fixiert ist. Durch Drehen an der Spindel kann somit die vertikale Höhe des beweglichen Auslegers verändert werden. Da der Ausleger auch die Aufnahme für das Trenngerät enthält, ist durch Drehen der Spindel die Höhe der Trennebene variierbar.

Vorteilhaft wird als Aufnahme für das Trenngerät ein Bolzen verwendet, der auf dem Aufleger in die Vertikale nach oben zeigend angebracht ist. Die meisten Trenngeräte besitzen eine Aufnahmeöffnung, die senkrecht zur Trennebene ausgerichtet ist. Durch einfaches Aufstecken der Aufnahmeöffnung auf den im Durchmesser passenden Aufnahmebolzen ist somit das Trenngerät automatisch für die waagerechte Trennebene ausgerichtet und kann aufgrund der Drehbarkeit um die Aufnahmebolzenachse und die Beweglichkeit des Auslegers leicht gegen die Schiene herangeführt werden.

Besonders vorteilhaft weist das Grundgestell am Anschlagswinkel mindestens zwei zueinander beabstandete Schienenhaltekrallen auf, die auf der Trennseite in Höhe des Schienenkopfbereichs in Richtung Schienensteg zeigen und dabei von oben nach unten gesehen eine schräg nach unten verlaufende Form zum Schienensteg hin besitzen. Damit ist das Grundgestell für alle Schienentypen verwendbar, unabhängig von der Form oder Höhe des Schienenkopfes.

Beim Heranführen der Vorrichtung an die Trennseite bei gleichzeitigem Aufliegen der Auflageanschläge auf den Schienenköpfen, greifen die angeschrägten Haltekrallen unabhängig von der genauen Höhe der Schienenköpfe jeweils am äußeren unteren Schienenkopfbereich an.

Auf der gegenüberliegenden Seite ist vorteilhaft ebenfalls mindestens eine solche Haltekralle am verschieb- und fixierbaren Anschlag angebracht. Damit lässt sich die Vorrichtung unabhängig von der Form und Höhe des Schienenkopfes festklemmen und fixieren.

Mit der erfindungsgemäßen Vorrichtung lässt sich gemäß Anspruch 7 ein Verfahren zum Entfernen von Befestigungsmitteln, die am Schienensteg eines Schienenverkehrsweges angebracht sind, angeben.

Zunächst wird das Grundgestell der Fixier- und Führungsvorrichtung auf die Schiene von oben aufgesetzt, so dass die Seite des Grundgestells, an der sich die Aufnahme für das Trenngerät befindet, an der Trennseite der Schiene sitzt, d.h. an der Seite der Schiene, wo sich auch die aufzutrennenden Befestigungsmittel befinden. Das Grundgestell sitzt nun mit seinen Schienenkopfanschlägen auf den Schienenköpfen der Schienen, die sich an dieser Stelle des Gleises befinden. Hierfür stehen immer mindestens zwei Schienen zur Verfügung. Nun wird das Grundgestell horizontal zur Schiene gezogen, bis die seitlichen Anschläge des Grundgestells am Schienenkopf anliegen. Durch Betätigen der Höhenverstellung wird die Fixier- und Führungsvorrichtung so ausgerichtet, dass die Trennebene des später anzubringenden Trenngeräts in etwa in der Mitte und längs durch die Befestigungsmittel verläuft. Die Fixier- und Führungsvorrichtung wird in dieser Position fixiert, indem der verschieb- und fixierbare Anschlag in Richtung zur Trenngeräteaufnahme an eine zweite Schiene herangeführt und bei festem Anliegen an der Schiene der Anschlag mithilfe mindestens eines Feststellelements am Grundgestell fixiert wird. Das Grundgestell liegt nun auf den Schienenköpfen auf und ist um die beiden Schienen, an denen die Anschläge liegen, eingespannt. Nun wird das Trenngerät in die Aufnahme an der Fixier- und Führungsvorrichtung geführt und überprüft, ob die Trennebene wie gewünscht verläuft. Dann wird das Trenngerät eingeschaltet und an die zu lösenden Befestigungsmittel waagerecht herangeführt. Das Befestigungsmittel wird längs so tief durchtrennt, bis sich das Befestigungsmittel von der Schiene entfernen lässt, bzw. von selbst abfällt.

Dann wird das Trenngerät wieder ausgeschaltet und abgesetzt, die Fixier-und Führungsvorrichtung durch Lösen des Feststellelements wieder gelöst und entfernt.

Die Erfindung wird im Folgenden anhand eines Ausführungsbeispiels, das durch mehrere Figuren dargestellt wird, näher erläutert.

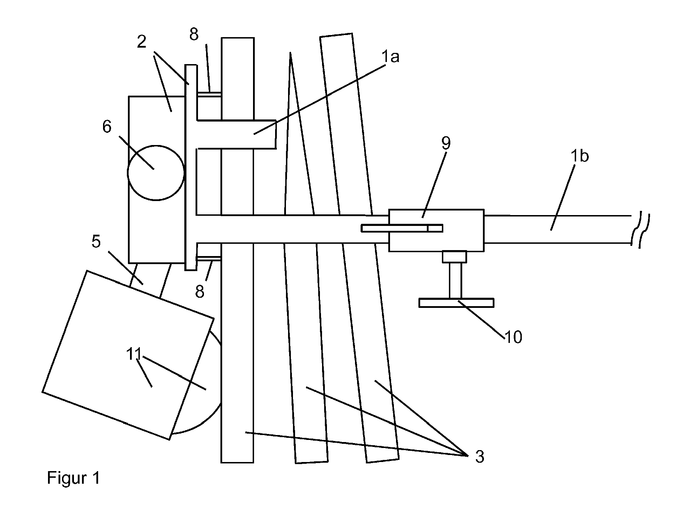

Fig. 1 zeigt die Draufsicht von oben auf eine erfindungsgemäße Fixier-und Führungsvorrichtung, mit Anschlagwinkel (2), Ausleger (5), Spindelstock (4) zur Höhenverstellung des Auslegers (5), mit Handrad (6) zum Einstellen der Höhe und Trenngerät mit Trennscheibe (11). Weiterhin sind die festen (8) sowie die verschieb- und fixierbaren Schienenhaltekralle (9) zu sehen. Die verschieb- und fixierbare Schienenhaltekralle (9) wird mithilfe der Fixierschraube (10) fixiert. Zwischen den linken und rechten Schienenhaltekrallen (8 und 9) liegt die Vorrichtung mit dem schienenüberspannenden Vierkantstahl (1b) des Grundgestells auf den darunter durchlaufenden Schienen (3) auf. Eine zweite, kurze obere Auflage (1a) aus Vierkantstahl stabilisiert die Vorrichtung und verhindert ein Kippen beim Aufsetzen auf die Schienen (3).

Fig. 2 zeigt eine Seitenansicht der Vorrichtung ohne Trenngerät. Hier ist die schräge Form der Schienenhaltekrallen (8 und 9) zu sehen, wie sie jeweils am unteren Bereich der beiden Schienen (3) eingreifen. Weiterhin ist in dieser Darstellung der Ausleger (5) mit dem Aufnahmebolzen (7) für das Trenngerät zu sehen.

Fig.3 zeigt eine Explosions-Darstellung einer erfindungsgemäßen Vorrichtung, ohne Trenngerät und ohne die verschieb- und fixierbare Schienenhaltekralle.

Fig. 4 zeigt eine beispielhafte Ausführung einer verschieb- und fixierbaren Schienenhaltekralle (9) mit Fixierschraube (10).

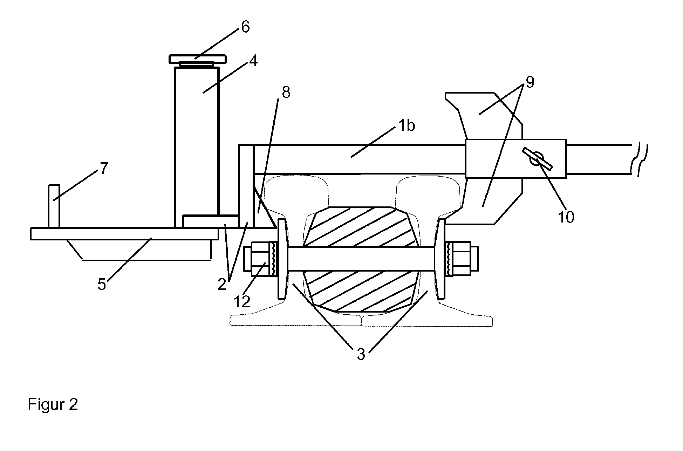

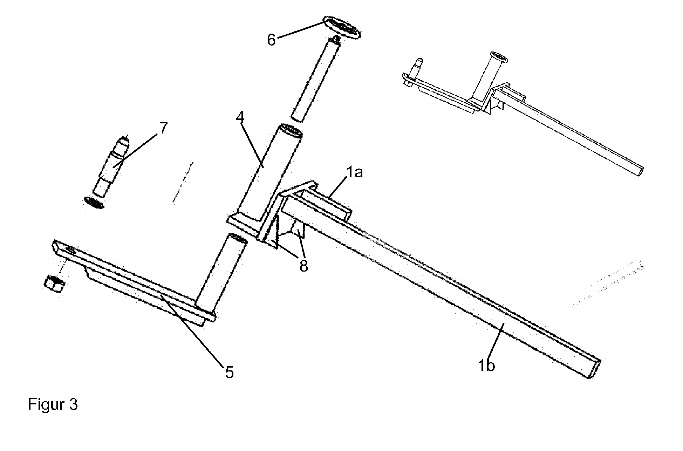

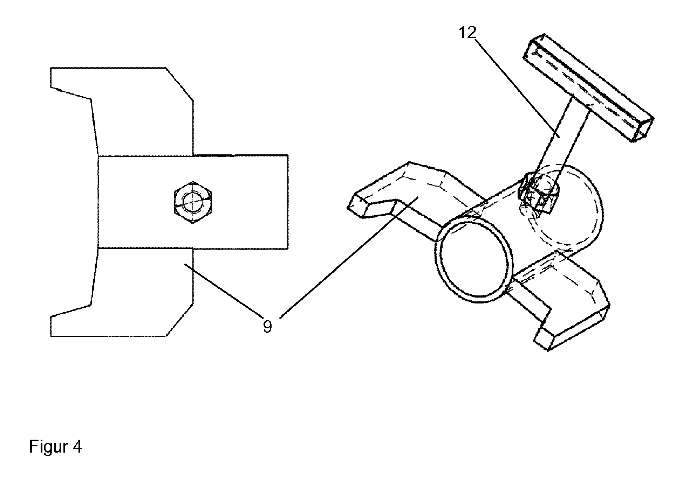

Eine beispielhafte Fixier- und Führungsvorrichtung gemäß den Figuren 1 bis 4 nimmt mithilfe des Aufnahmebolzens (7) als Trenngerät ein im Gleisbau häufig verwendetes Trennschleifgerät (11) mit Verbrennungsmotor auf. Das Trenngerät (11) verfügt über eine Aufnahme-Hülse am Gehäuse, die senkrecht zur durch die Trennscheibe definierten Trennebene verläuft. Für andere Trenngeräte (11) müssen eventuell abgewandelte Aufnahmebolzen oder ein auf den hier verwendeten Aufnahmebolzen passender Adapter bereitgestellt werden. Nach dem Aufstecken des Trenngeräts (11) auf den Aufnahmebolzen (7) ist das Trenngerät (11) um die durch den Bolzen (7) definierte Achse drehbeweglich. Der Aufnahmebolzen (7) ist auf einem Ausleger (5) in die Vertikale zeigend befestigt, der wiederum über einen Spindelstock (4) höhenverstellbar am Grundgestell der Fixier- und Führungsvorrichtung befestigt ist. Das Gehäuse des Spindelstocks (4) ist fest an dem Grundgestell fixiert, während der Ausleger (5) drehbeweglich am höhenveränderlichen Teil der Spindel (4) fixiert ist. Durch Drehen des Handrads (6) an der Spindel (4) kann somit die vertikale Höhe des Auslegers (5) verändert werden. Da der Ausleger (5) auch die Aufnahme (7) für das Trenngerät (11) enthält, ist durch Drehen der Spindel die Höhe der Trennebene variierbar. Somit ist die Vorrichtung für verschiedene Schienenhöhen verwendbar.

Bei jeder Drehung des Trenngeräts (11) um den Aufnahmebolzen (7) bleibt die Trennebene relativ zur Lage des Grundgestells erhalten. Durch Fixierung des Grundgestells an den Schienen (3) kann somit auch die Trennebene während des Trennvorgangs waagerecht und mittig entlang der Bolzen (12) stabil gehalten werden. Das Grundgestell der Fixier- und Führungsvorrichtung verfügt hierfür über mehrere Anschläge, die sich an mehreren Stellen an den Schienen (3) abstützen. Mithilfe der beiden seitlichen Anschläge (8), die auf einem Winkelstahl (2) entlang der Längsrichtung der Schiene (3) voneinander entfernt angebracht sind, stützt sich das Grundgestell am Schienenkopf der zu bearbeitenden Schiene (3) ab. Als Anschläge dienen Schienenhaltekrallen (8), die in Höhe des Schienenkopfbereichs in Richtung Schienensteg zeigen und dabei von oben nach unten gesehen eine schräg nach unten verlaufende Form zum Schienensteg hin besitzen. Damit ist das Grundgestell für alle Schienentypen verwendbar, unabhängig von der Form oder Höhe des Schienenkopfes.

Um die Anschläge weiterhin gegen die beim Schneiden auftretenden Gegenkräfte zu kontern, verfügt das Grundgestell über einen verschieb- und fixierbaren Anschlag (9), der ebenfalls als Schienenhaltekralle ausgestaltet ist und über den langen Auflagerahmen (1 b) geschoben ist. Dieser Teil des Auflagerahmens des Grundgestells aus Vierkantstahl dient gleichzeitig als Auflage auf die unter dem Grundgestell durchlaufenden Schienenköpfe (3) und als Verbindung zum Winkelstahl (2) mit den seitlichen Anschlägen (8) auf der Trennseite. Am Winkelstahl (2) ist noch ein zweiter Vierkantstahl (1a) angebracht, der parallel und auf gleicher Höhe zum langen Auflagerahmen (1b) verläuft, aber wesentlich kürzer ist. Er dient ebenfalls zur Auflage auf der Schiene (3), aber nur auf der Schiene an der auch die Bolzenmutter (12) anliegt.

Die Fixierung des verschiebbaren Anschlags (9) erfolgt hier mit einer manuell bedienbaren Schraube (10).

Das Grundgestell kann mithilfe der Anschläge (8) und der Fixierung des verschiebbaren Anschlags (9) an jedem Punkt im Bereich des Herzstücks einer Weiche sicher fixiert werden. Aufgrund der Verschiebbarkeit kann es auch bei Gleisen mit unterschiedlichen Spurweiten verwendet werden, nicht nur im Weichenbereich.

Nachdem eine zu lösende Verbindung in Form einer festsitzenden Herzstückbolzenmutter (12) identifiziert worden ist, sollen Bolzen und Bolzenmutter (12) mithilfe eines Trennschleifgeräts (11) längs bis zur Bolzenunterlegscheibe durchgeschnitten werden.

Als Herzstückbolzen sind beispielsweise Bolzen verschiedener Länge zwischen 220 bis 500 mm eingebaut (220 bis 500 x 26 x 1,5 mm).

Zunächst wird das Grundgestell der Fixier- und Führungsvorrichtung auf die Schienen (3) von oben aufgesetzt, so dass die Seite des Grundgestells, an der sich die Aufnahme (7) für das Trenngerät (11) befindet an der Seite der Schiene (3) sitzt, wo sich auch die zu lösende Bolzenmutter (12) befindet. Die Seite der Schiene, an der sich der Trennvorgang abspielt, soll hier kurz als "Trennseite" definiert werden. Das Grundgestell sitzt nun mit seinen Auflagerahmen (1) auf den Schienenköpfen der Schienen (3), die sich an dieser Stelle des Gleises befinden. Nun wird das Grundgestell horizontal an die Schiene (3) herangezogen, bis die seitlichen Anschläge (8) des Grundgestells an der Trennseite am Schienenkopf anliegen. Durch Betätigen der Höhenverstellung (6) wird die Fixier- und Führungsvorrichtung so ausgerichtet, dass die Trennebene des später anzubringenden Trenngeräts (11) in etwa in der Mitte und längs durch die Bolzenschraube mit Mutter (12) verläuft. Die Fixier- und Führungsvorrichtung wird in dieser Position fixiert, indem der verschieb- und fixierbare Anschlag (9) in Richtung zur Trenngeräteaufnahme (7) an die zweite Schiene (3) im Herzstückbereich der Weiche herangeführt und bei festem Anliegen an der Schiene der Anschlag (9) mithilfe der Feststellschraube (10) am Grundgestell fixiert wird. Das Grundgestell liegt nun auf den Schienenköpfen (3) auf und ist um die beiden Schienen, an denen die Anschläge (8, 9) liegen, eingespannt. Nun wird das Trenngerät (11) in die Aufnahme (7) an der Fixier- und Führungsvorrichtung geführt und überprüft, ob die Trennebene wie gewünscht verläuft. Dann wird das Trenngerät (11) eingeschaltet und an die zu lösende Bolzenmutter (12) waagerecht herangeführt. Die Bolzenmutter (12) wird längs so tief durchtrennt, bis sich die Bolzenmutter von der Schiene entfernen lässt, bzw. die beiden Mutterhälften von selbst abfallen.

Dann wird das Trenngerät wieder ausgeschaltet und abgesetzt, die Fixier-und Führungsvorrichtung durch Lösen der Feststellschraube (10) wieder gelöst und entfernt.

### Bezugszeichenliste

1. Auflagerahmen auf den Schienen mit kurzem (1a) und langem Arm (1 b)
2. Anschlagwinkel
3. Schiene
4. Spindelstock
5. Ausleger
6. Handrad zur Höheneinstellung
7. Aufnahmebolzen für das Trenngerät
8. Feste Schienenhaltekrallen
9. Verschieb- und fixierbare Schienenhaltekralle
10. Fixierschraube
11. Trenngerät
12.Zu trennende Bolzenmutter auf Bolzen

## Patentansprüche

1. Fixier- und Führungsvorrichtung zum Entfernen von Befestigungsmitteln, die am Schienensteg eines Schienenverkehrswegs angebracht sind, bestehend aus einer Aufnahme für ein Schneid- bzw. Trenngerät und Befestigungsmitteln zur Befestigung der Vorrichtung an Komponenten des Schienenverkehrsweges, **dadurch gekennzeichnet, dass** die Vorrichtung aufweist:
• ein Grundgestell
• mindestens einen seitlichen Anschlag am dem Schneid- bzw. Trenngerät zugewandten Ende des Grundgestells zur seitlichen Anlage der Vorrichtung an den Schienenkopf der Schiene, an deren Schienensteg der Schneid- bzw. Trennvorgang vorgenommen wird,
• mindestens einen weiteren Anschlag am dem Schneid- bzw. Trenngerät zugewandten Ende des Grundgestells zur Auflage auf dem Schienenkopf der Schiene, an deren Schienensteg der Schneid- bzw. Trennvorgang vorgenommen wird,
• mindestens einen entlang des Grundgestells verschieb- und fixierbaren Anschlag am dem Schneid- bzw. Trenngerät abgewandten Ende des Grundgestells, zur Befestigung an einer weiteren Schiene, die auf der dem Trenn- bzw. Schneidgerät abgewandten Seite liegt,
wobei die Aufnahme für das Schneid- bzw. Trenngerät und dessen Führung so gestaltet sind, dass die Trennebene in etwa in der Mitte und längs des zu lösenden Befestigungsmittels verläuft.

2. Vorrichtung zum Entfernen von Befestigungsmitteln, die am Schienensteg eines Schienenverkehrswegs angebracht sind, gemäß Anspruch 1, wobei die Aufnahme für das Schneid- bzw. Trenngerät und somit die einstellbare Trennebene in vertikaler Richtung mithilfe einer Höheneinstellung veränderbar ist.

3. Vorrichtung zum Entfernen von Befestigungsmitteln, die am Schienensteg eines Schienenverkehrswegs angebracht sind, gemäß Anspruch 2, wobei die veränderbare Höheneinstellung durch einen Spindelstock realisiert ist, wobei das Gehäuse des Spindelstocks am Grundgestell der Fixier- und Führungsvorrichtung befestigt ist, und der Ausleger mit der Aufnahme für das Schneid- bzw. Trenngerät am beweglichen, höhenveränderlichen Teil der Spindel befestigt ist.

4. Vorrichtung zum Entfernen von Befestigungsmitteln, die am Schienensteg eines Schienenverkehrswegs angebracht sind, gemäß mindestens einem der zuvor genannten Ansprüche, wobei die Aufnahme für das Schneid- bzw. Trenngerät ein Aufnahmebolzen ist, der auf einem am Grundgestell befestigten Ausleger im Wesentlichen in die Vertikale zeigend befestigt ist und in eine entsprechende axiale Öffnung am Schneid- bzw. Trenngerät passt, wobei der Aufnahmebolzen als Drehachse für das Schneid- bzw. Trenngerät mit im Wesentlichen waagrechter Trennebene dient.

5. Vorrichtung zum Entfernen von Befestigungsmitteln, die am Schienensteg eines Schienenverkehrswegs angebracht sind, gemäß mindestens einem der zuvor genannten Ansprüche, wobei der mindestens eine seitliche Anschlag am dem Schneid- bzw. Trenngerät zugewandten Ende des Grundgestells mindestens zwei voneinander beabstandete Schienenhaltekrallen aufweist, die in Höhe des Schienenkopfbereichs in Richtung Schienensteg zeigen und eine schräg nach unten verlaufende Form aufweisen, so dass beim Festklemmen bzw. Einspannen die schrägen Krallen-Kanten unter den Schienenkopf geschoben werden, bis sie im unteren Bereich des Schienenkopfs angreifen.

6. Vorrichtung zum Entfernen von Befestigungsmitteln, die am Schienensteg eines Schienenverkehrswegs angebracht sind, gemäß mindestens einem der zuvor genannten Ansprüche, wobei der mindestens eine, entlang des Grundgestells verschieb- und fixierbare Anschlag am dem Schneid- bzw. Trenngerät abgewandten Ende des Grundgestells mindestens eine Haltekralle aufweist, zur Befestigung an einer Schiene, die auf der dem Trenn- bzw. Schneidgerät abgewandten Seite liegt.

7. Verfahren zum Entfernen von Befestigungsmitteln, die am Schienensteg eines Schienenverkehrswegs angebracht sind, wobei ein Trennoder Schneidgerät mithilfe einer Fixier- und Führungsvorrichtung von der Seite an den Schienensteg herangeführt wird, wobei die Trenn- bzw. Schneidebene eingestellt wird, **dadurch gekennzeichnet, dass** das Verfahren folgende Schritte umfasst:
• die Fixier- und Führungsvorrichtung wird von oben auf den Schienenweg so aufgesetzt, dass das Trenn- oder Schneidgerät an der zu trennenden Befestigung platziert wird, wobei das Grundgestell der Fixier- und Führungsvorrichtung auf mindestens zwei unterschiedlichen Schienenköpfen aufliegt,
• die Fixier- und Führungsvorrichtung wird so ausgerichtet, dass die Trennebene in etwa in der Mitte und längs der zu lösenden Befestigungsmittel verläuft,
• die Fixier- und Führungsvorrichtung wird an Komponenten des Schienenweges fixiert, indem sie an einer Schiene mit mindestens einem am Grundgestell befestigten Anschlag und mindestens einem entlang des Grundgestells verschieb- und mithilfe mindestens eines Feststellelements fixierbaren Anschlag an mindestens einer weiteren Schiene festgeklemmt bzw. eingespannt wird,
• ein Trenn- oder Schneidgerät wird mit der Fixier- und Führungsvorrichtung verbunden,
• mit dem Trenn- oder Schneidgerät wird das zu lösende Befestigungsmittel entlang der geführten Trennebene soweit durchtrennt, bis sich das Befestigungsmittel von der Schiene entfernen lässt,
• nach dem Ende des Trenn- bzw. Schneidvorgangs wird die Fixier- und Führungsvorrichtung mithilfe des mindestens einen Feststellelements wieder gelöst und die Vorrichtung entfernt.

8. Verfahren zum Entfernen von Befestigungsmitteln, die am Schienensteg eines Schienenverkehrswegs angebracht sind, gemäß Anspruch 7, wobei eine im Wesentlichen waagrecht verlaufende Trennebene eingestellt wird.

9. Verfahren zum Entfernen von Befestigungsmitteln, die am Schienensteg eines Schienenverkehrswegs angebracht sind, gemäß mindestens einem der zuvor genannten Ansprüche 7 und 8, wobei als Trenn-oder Schneidgerät ein Trennschleifer verwendet wird.
